# EUROPÄISCHE PATENTSCHRIFT

(11) **EP 2 178 426 B1**
(45) Veröffentlichungstag und Bekanntmachung des Hinweises auf die Patenterteilung: **23.03.2016**
(21) Anmeldenummer: 08786611.7
(22) Anmeldetag: 30.07.2008
(51) Int. Cl.: A47J 43/07

(54) **KÜCHENMASCHINE UND VERFAHREN ZUM BETREIBEN EINER KÜCHENMASCHINE**
FOOD PROCESSOR AND METHOD FOR OPERATING A FOOD PROCESSOR
ROBOT MÉNAGER ET PROCÉDÉ DE FONCTIONNEMENT

(30) Priorität: 14.08.2007 DE 102007038349
(43) Veröffentlichungstag der Anmeldung: 28.04.2010
(73) Patentinhaber: BSH Hausgeräte GmbH, 81739 München (DE)
(72) Erfinder: PESEC, Jurij, 3301 Petrovce (SI); RUDEZ, Darko, 3230 Sentjur (SI); SABEC, Roman, 3327 Smartno (SI); OBLAK, Aleksander, 3332 Recica Ob Savinji (SI)
(86) Internationale Anmeldenummer: PCT/EP2008/059976
(87) Internationale Veröffentlichungsnummer: WO 2009/021842

(56) Entgegenhaltungen:
- WO-A-00/13563
- WO-A-2008/031711
- DE-A1- 19 646 423
- DE-U1- 20 201 898
- GB-A- 2 118 828
- GB-A- 2 426 384
- US-A- 6 112 649

## Beschreibung

### Beschreibung

### Hintergrund der Erfindung

Die vorliegende Erfindung betrifft ein System umfassend ein Küchenmaschine und mindestens ein erstes und ein zweites Bearbeitungsgeräte gemäß dem Oberbegriff des Anspruchs 1.

### Stand der Technik

Aus dem Stand der Technik sind Küchenmaschinen bekannt, an denen unterschiedliche Bearbeitungsgeräte zum Verarbeiten und Zubereiten von Lebensmitteln angeordnet werden können. Derartige Bearbeitungsgeräte umfassen beispielsweise Mixbecher, Knethaken, Rührbesen oder Messer. Zum Anordnen der Bearbeitungsgeräte an den Küchenmaschinen und zum Betreiben der Bearbeitungsgeräte umfassen die Küchenmaschinen Kupplungsstellen, an denen geeignete Antriebsmittel vorgesehen sind, gewöhnlich eine von einem Motor der Küchenmaschine angetriebene Welle.

Damit eine Küchenmaschine nicht in Betrieb genommen werden kann bzw. deren Motor nicht angeschaltet werden kann, ohne dass ein Bearbeitungsgerät oder ein Abdeckteil der Kupplungsstelle als Schutzeinrichtung die Kupplungsstellen betriebssicher abdeckt, ist an jeder Kupplungsstelle eine Erfassungseinrichtung vorgesehen, mit der ermittelt werden kann, ob ein Bearbeitungsgerät oder ein Abdeckteil ordnungsgemäß auf jede der vorhandenen Kupplungsstellen aufgesetzt ist. Hierbei können die Bearbeitungsgeräte bzw. die Abdeckteile Betätigungselemente umfassen, mittels derer die jeweilige Erfassungseinrichtung einer Kupplungsstelle, auf die die Bearbeitungsgeräte bzw. die Abdeckteile aufgesetzt werden, betätigt werden kann.

Küchenmaschinen mit einem derart wirkenden Schutzmechanismus haben sich bereits vielfach bewährt und können das Verletzungsrisiko bei einer Verwendung der Küchenmaschine erheblich reduzieren. Beispielsweise ist aus der deutschen Patentschrift DE 699 02 797 T2 ein elektrisches Küchengerät zum Betreiben eines Nahrungsmittelverarbeitungswerkzeugs eines Mixeraufsatzes bekannt, bei dem das Küchengerät nur dann elektrisch betrieben werden kann, wenn durch ein ordnungsgemäßes Aufsetzen des Mixeraufsatzes auf eine Ankoppelstelle des Küchengerätes ein elektrischer Schutzschalter innerhalb des Küchengerätes betätigt wird. Hierzu umfasst der Mixeraufsatz einen mittels einer Taste bewegbaren Betätigungsbolzen, der an einem dem Küchengerät zugewandten Mixeraufsatzende übersteht und durch eine Gehäuseöffnung des Küchengerätes hindurch bis an den elektrischen Schutzschalter heranreichen kann, wenn der Mixeraufsatz auf der Ankoppelstelle betriebsbereit aufgesetzt ist. Befindet sich der Mixeraufsatz in dieser Arbeitsposition und wird die Taste gedrückt, bewegt sich der Betätigungsbolzen von oben vertikal gegen den elektrischen Schutzschalter, so dass dieser eine translatorische Bewegung ausführen und hierbei einen Motorstromkreis schließen kann, um ein Motor des Küchengerätes zum Antreiben des Nahrungsmittelverarbeitungswerkzeugs mit Strom zu versorgen. Wirkt auf den elektrischen Schutzschalter kein Betätigungsbolzen ein, wird der Motorstromkreis nicht geschlossen und das elektrische Küchengerät lässt sich nicht betreiben.

Weiter ist aus der europäischen Patentschrift EP 1 272 084 B1 eine Küchenmaschine bekannt, die mit zwei an ihrem Gehäuse räumlich beabstandet angeordneten Ankoppelstellen für geeignete Bearbeitungsgeräte ausgestattet ist. Jede der Ankoppelstellen verfügt über eine Welle, die von einem elektrischen Antriebsmotor angetrieben werden kann. Damit die Küchenmaschine nur dann in Betrieb genommen werden kann, wenn an den Ankoppelstellen jeweils ein Bearbeitungsgerät oder ein geeignetes Abdeckteil ordnungsgemäß angebracht ist, ist jede der Ankoppelstellen mit einer Erfassungseinrichtung versehen, die mit einem im Stromkreis des Antriebsmotors liegenden Kontaktschalter wechselwirken kann. Ist an nur einer der vorhandenen Ankoppelstellen ein Bearbeitungsgerät oder ein Abdeckteil nicht ordnungsgemäß angeordnet, bleibt zumindest eine der Erfassungseinrichtungen in einer Stellung, in der der Stromkreis des Antriebsmotors unterbrochen bleibt, sodass die Küchenmaschine nicht in Betrieb genommen werden kann. Aus der DE19646423 A1 ist ein weiteres System bekannt.

Die bekannten Schutzmechanismen gewährleisten eine hohe Betriebssicherheit der Küchenmaschine. Jedoch kann nachteilig sein, dass die Verwendung der Bearbeitungsgeräte auf speziell für die Küchenmaschine vorgesehene Bearbeitungsgeräte eingeschränkt ist, weil die Erfassungseinrichtungen nur mit auf die jeweilige Erfassungseinrichtung abgestimmten Betätigungselementen betätigt werden können. Insbesondere können die Schutzmechanismen bekannter gattungsgemäßer Küchenmaschinen die Verwendung von eventuell vorhandenen älteren Bearbeitungsgeräten an der Küchenmaschine erschweren oder verhindern.

### Der Erfindung zugrundeliegende Aufgabe

Der vorliegenden Erfindung liegt die Aufgabe zugrunde, eine verbesserte Küchenmaschine mit einer Erfassungseinrichtung bereitzustellen. Insbesondere ist es Aufgabe der Erfindung, eine verbesserte Küchenmaschine bereitzustellen, an der auch Bearbeitungsgeräte verwendet werden können, die ursprünglich nicht für die Erfassungseinrichtung des Küchenmaschine vorgesehen waren.

### Erfindungsgemäße Lösung

Zur Lösung der Aufgabe lehrt die vorliegende Erfindung ein System aus einer Küchenmaschine und mindestens einem ersten und einem zweiten Bearbeitungsgeräte mit den Merkmalen des Anspruchs 1.

Unter einer Erfassungseinrichtung wird im Zusammenhang mit der vorliegenden Erfindung eine Einrichtung verstanden, mit der mechanisch ermittelbar ist, ob ein Bearbeitungsgerät oder ein Abdeckteil an einer Kupplungsstelle ordnungsgemäß angebracht ist. Insbesondere ist die Erfassungseinrichtung durch geeignete Betätigungselemente, die Teil eines Bearbeitungsgeräts oder Abdeckteils sein können, betätigbar.

Die Bearbeitungsgeräte können beispielsweise Mixbecher, Knethaken, Rührbesen oder Messer umfassen. Es sind darüber hinaus jedoch auch weitere Bearbeitungsgeräte einsetzbar. An Stelle eines Bearbeitungsgeräts kann ein Abdeckteil als Schutzeinrichtung auf eine Kupplungsstelle einer Küchenmaschine aufgesetzt werden, wenn an dieser Kupplungsstelle kein Bearbeitungsgerät verwendet werden soll, aber die Küchenmaschine mit einem Bearbeitungsgerät an einer weiteren Kupplungsstelle der Küchenmaschine betrieben werden soll. Durch Abdecken der Kupplungsstelle mit dem Abdeckteil kann einer Verletzung eines Benutzers der Küchenmaschine an beweglichen Teilen der abgedeckten Kupplungsstelle verhinder werden. Außerdem kann das Abdeckteil einer Verschmutzung der Kupplungsstelle entgegenwirken.

Als Betätigungselement wird im Zusammenhang mit der Erfindung ein Teil des Bearbeitungsgeräts oder des Abdeckteils bezeichnet, das den Betätigungsbereich der Erfassungseinrichtung in der Weise mechanisch betätigen kann, dass letzeres das ordnungsgemäße Aufsetzen des Bearbeitungsgeräts oder Abdeckteils registriert.

Die Bezeichnung Betätigungsbereich beschreibt einen Bereich der Erfassungseinrichtung, durch den die Erfassungseinrichtung mit Betätigungselementen der Bearbeitungsgeräte oder Abdeckteile in Wirkkontakt treten kann, wenn die Bearbeitungsgeräte oder Abdeckteile ordnungsgemäß auf die Kupplungsstelle der Küchenmaschine aufgesetzt werden. Der erste Betätigungsbereich unterscheidet sich von dem zweiten Betätigungsbereich durch seine Lage und Orientierung an der Erfassungseinrichtung. Durch die zwei Betätigungsbereiche der Erfassungseinrichtung können an einer einzigen Kupplungsstelle der Küchenmaschine Bearbeitungsgeräte an betrieben werden, die auf unterschiedliche Weise auf die Betätigungseinrichtung einwirken. Insbesondere können Bearbeitungsgeräte mit unterschiedlich ausgebildeten Betätigungselementen, die aus unterschiedlichen Betätigungsrichtungen, etwa in horizontale und in vertikale Richtung, auf die Erfassungseinrichtung wirken, an ein und derselben Küchenmaschine ordnungsgemäß verwendet und betrieben werden.

Mit der Erfindung ist vorteilhaft erreichbar, dass an einer einzigen Küchenmaschine insbesondere auch Bearbeitungsgeräte betrieben werden können, die nicht unmittelbar als Zubehör der Küchenmaschine vorgesehen sind, ohne auf die bewährten Schutzfunktionen verzichten zu müssen, nämlich dass die Küchenmaschine nur bei ordnungsgemäß aufgesetztem Bearbeitungsgerät in Betrieb genommen werden kann. Hierdurch kann der Einsatzbereich der Küchenmaschine in vorteilhafter Weise auch auf Bearbeitungsgeräte erweitert werden, die beispielsweise nicht im Lieferumfang der Küchenmaschine vorgesehen sind. Insbesondere können an der vorliegenden Küchenmaschine auch ältere Bearbeitungsgeräte angeordnet und ordnungsgemäß betrieben werden, ohne hierbei auf den zuvor beschriebenen Schutzmechanismus verzichten zu müssen.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Vorzugsweise ist die Erfassungseinrichtung im ersten Betätigungsbereich durch Krafteinwirkung aus einer ersten Betätigungsrichtung betätigbar während sie im zweiten Betätigungsbereich durch Krafteinwirkung aus einer hiervon abweichenden zweiten Betätigungsrichtung betätigbar ist. Mit dieser Ausführung der Erfindung kann erreicht werden, dass die Erfassungseinrichtung aus wenigstens zwei voneinander abweichenden Betätigungsrichtungen betätigt werden kann. Die Betätigungsrichtungen schließen vorzugsweise ein Winkel zwischen 10° und 180° (bezogen auf einen Vollwinkel von 360°) ein, besonders vorzugsweise zwischen 45°und 135°, besonders vorzugsweise zwischen 60° und 120°. Besonders vorzugsweise verlaufen die voneinander abweichenden Betätigungsrichtungen im Wesentlichen rechtwinklig zueinander.

Die Erfassungseinrichtung kann baulich besonders einfach in die Küchenmaschine integriert werden, wenn sie beim Betätigen in eine Schaltrichtung bewegt wird. Mit Schaltrichtung ist eine Bewegungsrichtung beschrieben, in die die Erfassungseinrichtung beim Betätigen mittels eines Betätigungselements verlagert werden kann, um mit einem elektrischen Schaltelement, z.B. einem Kontaktschalter, der Küchenmaschine zusammenzuwirken. Vorzugsweise wird die Erfassungseinrichtung hierbei linear in Schaltrichtung bewegt. Vorteilhafter Weise ist die Erfassungseinrichtung derart geführt, dass sie aus verschiedenen Betätigungsrichtungen entlang der Schaltrichtung translatorisch verlagerbar ist. Eine bevorzugte Ausführung der Erfindung sieht vor, dass wenigstens eine der Betätigungsrichtungen von der Schaltrichtung der Erfassungseinrichtung abweicht. Damit die Erfassungseinrichtung auch dann entlang der Schaltrichtung bewegt werden kann, wenn nicht in Schaltrichtung wirkende Betätigungskräfte auf die Erfassungseinrichtung einwirken, ist es vorteilhaft, wenn die Erfassungseinrichtung in einer Führung translatorisch derart geführt gelagert ist, dass auch auf die Erfassungseinrichtung aus einer von der Schaltrichtung abweichenden Richtung wirkende Betätigungskräfte eine Bewegung der Erfassungseinrichtung entlang einer Schaltrichtung bewirken können.

Eine bevorzugte Ausführung der Erfindung sieht vor, dass die Erfassungseinrichtung im ersten Betätigungsbereich durch Krafteinwirkung aus einer ersten im Wesentlichen in die Schaltrichtung der Erfassungseinrichtung verlaufenden Betätigungsrichtung betätigt werden kann. Besonders vorzugsweise ist die Schaltrichtung im Wesentlichen gleich der Richtung, aus der das Bearbeitungsgerät oder das Abdeckteil auf die Kupplungsstelle aufgesetzt wird. Die Betätigungseinrichtung wird bei der Betätigung vorzugsweise im Wesentlichen linear verlagert.

In einer bevorzugten Ausführung der Erfindung kann die Erfassungseinrichtung im zweiten Betätigungsbereich durch Krafteinwirkung aus einer von der Schaltrichtung abweichenden Betätigungsrichtung betätigt werden. Vorteilhafterweise kann die Kraft im zweiten Betätigungsbereich seitlich auf die Erfassungseinrichtung wirken und diese linear ebenfalls in Schaltrichtung bewegen, um sie zu betätigen. Besonders vorzugsweise bildet der zweite Betätigungsbereich ein Mittel zum Umlenken einer Betätigungsbewegung in eine von der Schaltrichtung abweichenden Betätigungsrichtung in eine Bewegung der Erfassungseinrichtung in Schaltrichtung.

Die Flächennormalen des ersten und des zweiten Betätigungsbereiche schließen vorzugsweise einen Winkel zwischen 10° und 90° ein, besonders vorzugsweise zwischen 22°und 68°, besonders vorzugsweise zwischen 30° und 60°, besonders vorzugsweise im Wesentlichen 45° ein. Mindestens einer der Betätigungsbereiche, besonders vorzugsweise sowohl der erste als auch der zweite Betätigungsbereich, ist vorzugsweise im Wesentlichen als ebene Flächen ausgebildet. Damit die Betätigungsbereiche gut erreichbar sind, sind sie vorzugsweise durch Außenflächen oder Oberflächen der Erfassungseinrichtung gebildet. Besonders vorzugsweise sind die Betätigungsbereiche voneinander weg weisend an der Erfassungseinrichtung angeordnet.

Gemäß einer nicht beanspruchten Ausführungsvariante können die Betätigungsbereiche voneinander beabstandet an der Erfassungseinrichtung angeordnet sein. Die Erfassungseinrichtung kann hierdurch selbst mit Betätigungselementen wechselwirken, die weit entfernt zueinander in die Kupplungsstelle hinein ragen. Eine alternative Ausführungsvariante sieht vor, dass die Betätigungsbereiche aneinander angrenzend an der Erfassungseinrichtung angeordnet sind. Hierdurch lässt sich die Erfassungseinrichtung besonders kompakter bauen. Besonders kompakt und platzsparend kann die Erfassungseinrichtung realisiert werden, wenn die Betätigungsbereiche gemäß einer nicht beanspruchten Ausführungsvariante glatt ineinander übergehend an der Erfassungseinrichtung angeordnet sind. Glatt bedeutet, dass die Fläche an jeder Stelle eine eindeutige Tangente aufweist. Erfindungsgemäß bilden die Betätigungsbereiche eine gekrümmte Betätigungsfläche an der Erfassungseinrichtung Gemäß einer nicht beanspruchten Ausführungsvariante ist alternativ auch eine in nicht glatter Übergang mit einer Kante zwischen den Betätigungsbereichen denkbar.

Vorzugsweise bildet mindestens einer der Betätigungsbereiche ein Ende der Erfassungseinrichtung, das besonders vorzugsweise aus dem Gehäuse der Küchenmaschine hinaus ragt. Mit dieser Ausführung der Erfindung ist erreichbar, dass der Betätigungsbereich durch das Betätigungselement des Bearbeitungsgerätes oder Abdeckteils besonders leicht zugänglich.

### Kurzbeschreibung der Zeichnungen

Die Erfindung wird im Folgenden anhand schematischer Zeichnungen an einem Ausführungsbeispiel, welches das Verständnis der Erfindung erleichtert, mit weiteren Einzelheiten näher erläutert.

Es zeigen:
- Fig. 1:: schematisch eine perspektivische Ansicht, die das Verständnis der Erfindung erleichtert, einer Küchenmaschine mit zwei an ihrem Gehäuse voneinander beabstandet angeordneten Kupplungsstellen;
- Fig. 2:: schematisch eine Detailansicht einer ersten der beiden Kupplungsstellen der Küchenmaschine aus Fig. 1; und
- Fig. 3:: schematisch eine Ansicht, die das Verständnis der Erfindung erleichtert, eines Schutzmechanismus aus einer Erfassungseinrichtung und eines Kontaktschalters in einem Motorstromkreis.

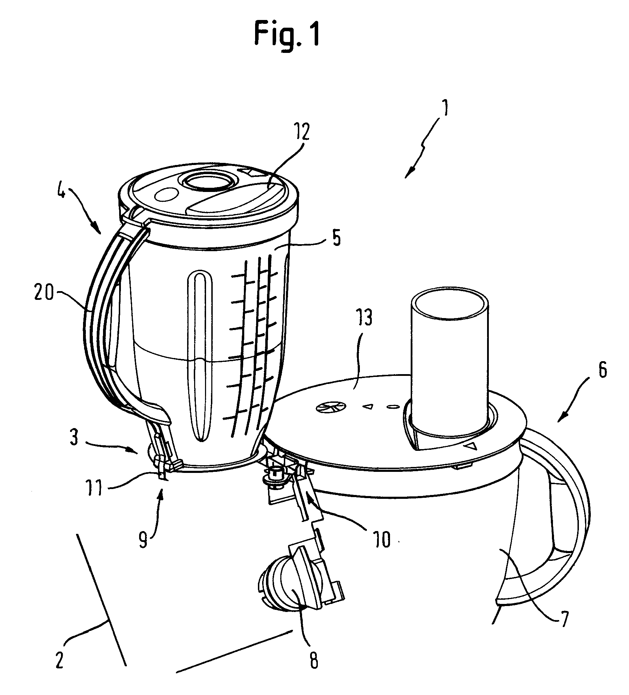

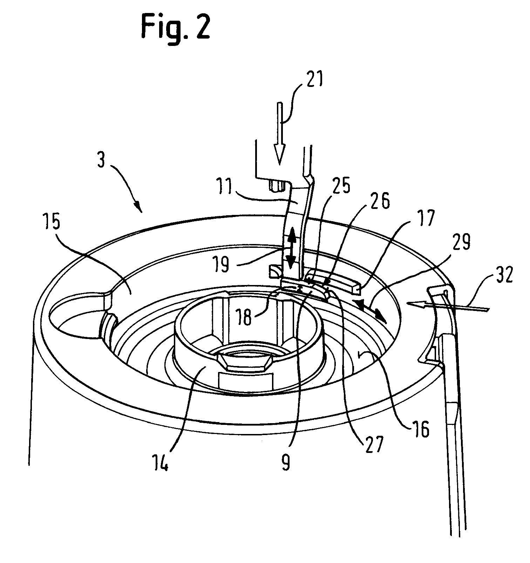

Die in den Figuren 1 und 2 gezeigte Küchenmaschine 1 umfasst ein Gehäuse 2 (hier nur schematisch angedeutet), an dem voneinander beabstandet eine erste Kupplungsstelle 3 zum Aufsetzen eines ersten Bearbeitungsgeräts 4 in Gestalt eines Mixbechers 5 und eine zweite Kupplungsstelle (nicht dargestellt) zum Aufsetzen eines zweiten Bearbeitungsgeräts 6 in Gestalt einer Rührschüssel 7 vorgesehen ist. Zum Einschalten der Küchenmaschine 1 dient ein Betriebsschalter 8.

Damit die Küchenmaschine 1 und die daran angeordneten Bearbeitungsgeräte 4 bzw. 6 nur dann in Betrieb genommen werden können, wenn an ihren Kupplungsstellen 3 die Bearbeitungsgeräte 4 bzw. 6 oder hier nicht gezeigte Abdeckteile als Sicherheitsabdeckungen für die Kupplungsstellen 3 angeordnet sind, ist im Bereich der ersten Kupplungsstelle 3 eine erste Erfassungseinrichtung 9 und im Bereich der zweiten Kupplungsstelle eine weitere Erfassungseinrichtung 10 vorgesehen.

Die erste Erfassungseinrichtung 9 wird mittels eines ersten Betätigungselements 11 betätigt, sobald sowohl der Mixbecher 5 auf die Kupplungsstelle 3 aufgesetzt als auch der Mixbecher 5 von einem Mixbecherdeckel 12 ordnungsgemäß verschlossen ist. Durch das Verschließen des Mixbechers 5 mittels Mixbecherdeckel 12 wird verhindert, dass ein Benutzer in den Mixbecher 5 hinein greifen kann. Hierzu in diesem Ausführungsbeispiel der Mixbecherdeckel 12 mit dem Betätigungselement 11 wirkverbunden. Erst wenn der Mixbecherdeckel 12 den Mixbecher 5 ordnungsgemäß verschließt, kann das Betätigungselement 11 in gewünschter Weise auf die Erfassungseinrichtung 9 einwirken.

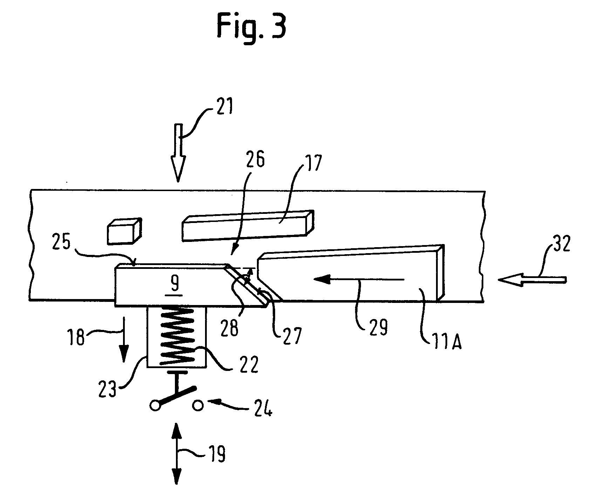

Entsprechend wirkt auf die zweite Erfassungseinrichtung 10 ein hier nicht näher gezeigtes zweites Betätigungselement ein, wenn auf dem zweiten Bearbeitungsgerät 6 bzw. der Rührschüssel 7 ein Rührschüsseldeckel 13 ordnungsgemäß aufgesetzt ist, so dass in die Rührschüssel 7 ebenfalls nicht mehr hineingegriffen werden kann. Auf diese zweite Erfassungseinrichtung 10 im Bereich der zweiten Kupplungsstelle für das zweite Bearbeitungsgerät 6 wird vorliegend nicht weiter eingegangen, da die Erfindung beispielhaft und ausführlich im Zusammenhang mit der in der Figur 2 gezeigten ersten Kupplungsstelle 3 und der dort vorgesehenen ersten Erfassungseinrichtung 9 (siehe auch Figur 3) beschrieben wird.

Die erste Kupplungsstelle 3 (siehe Figur 2) weist eine konzentrisch um eine Antriebswelle 14 herum ausgebildete Aufnahmemulde 15 auf, durch deren Aufnahmeboden 16 die erste Erfassungseinrichtung 9 heraus und in die erste Kupplungsstelle 3 hineinragt. Oberhalb der ersten Erfassungseinrichtung 9 sind Bestandteile 17 eines Bajonettverschlusses vorgesehen, mit denen beispielsweise der Mixbecher 5 fest aber lösbar an der ersten Kupplungsstelle 3 der Küchenmaschine 1 befestigt werden kann. Die erste Erfassungseinrichtung 9 ist in eine zur Antriebswelle 14 parallelen Schaltrichtung 18 bewegbar.

Die Verlagerung des Betätigungselementes 11 in Betätigungsrichtung 19, die parallel zur Schaltrichtung 18 verläuft, erfolgt durch den Mixbecherdeckel 12, wobei das Betätigungselement 11 auf die erste Erfassungseinrichtung 9 zu bewegt wird, wenn der Mixbecher 5 mit dem Mixbecherdeckel 12 ordnungsgemäß verschlossen wird. Hierzu ist der Mixbecherdeckel 12. durch geeignete Mittel 20 (siehe Figur 1) mit dem Betätigungselement 11 verbunden.

Wird das Betätigungselement 11 nun in Betätigungsrichtung 19 gegen die erste Erfassungseinrichtung 9 gedrückt, werden auf die erste Erfassungseinrichtung 9 in diese Richtung wirkende Betätigungskräfte 21 übertragen und die erste Erfassungseinrichtung 9 verlagert sich entgegen einer Federkraft einer Feder 22 (siehe Figur 3) in Schaltrichtung 18 in den Aufnahmeboden 16 und damit auch in das Gehäuse 2 der Küchenmaschine 1 hinein. Hierbei ist die Erfassungseinrichtung 9 betriebssicher von einer Führung 23 linear entlang der Schaltrichtung 18 geführt gelagert. Die Führung 23 ist so ausgebildet, dass die Erfassungseinrichtung 9 in ihr selbst dann nicht verkantet, wenn Betätigungskräfte, wie nachfolgend noch eingehend beschrieben, aus einer anderen Richtung als der Schaltrichtung auf die Erfassungseinrichtung 9 einwirken.
Durch die Betätigung der Erfassungseinrichtung 9 wird Kontaktschalter 24 in dem Gehäuses 2 (siehe Figur 3) in eine Stellung gebracht, in der der Motor der Küchenmaschine 1 mit Strom versorgt werden kann, wodurch die Küchenmaschine 1 nun über den Betriebsschalter 8 eingeschaltet bzw. ausgeschaltet werden kann und die Bearbeitungsgeräte 4 bzw. 6 Arbeit verrichten können. Bei dem Kontaktschalter 24 handelt es sich um eine zusätzliche Stromkreisunterbrechung des Motors. Der Kontaktschalter 24 ist von dem Betriebsschalter 8 verschieden.

Der Mixbecher 5 weist ein Betätigungselement 11 auf, das mit einem ersten Betätigungsbereich 25 kopfseitig an der ersten Erfassungseinrichtung 9 wechselwirkt, wodurch die erste Erfassungseinrichtung 9 unmittelbar in die Betätigungsrichtung 19, die mit der Schaltrichtung 18 zusammenfällt, translatorisch verlagert werden kann. Um an der ersten Kupplungsstelle 3 auch Bearbeitungsgeräte mit anders ausgebildeten Betätigungselementen 11A (siehe Figur 3) betreiben zu können, weist die Erfassungseinrichtung einen zweitem Betätigungsbereich 27 auf, der gegenüber dem ersten Betätigungsbereich 25 um einen Winkel 28 von 45° geneigt ist. Somit verfügt die Erfassungseinrichtung 9 über zwei Betätigungsbereiche 25 und 27, die aneinander angrenzen.

An dem ersten Betätigungbereich 25 kann das Betätigungselement 11 des ersten Bearbeitungsgeräts 4 aus einer ersten, vorzugsweise im Wesentlichen vertikalen, Betätigungsrichtung 19 die Erfassungseinrichtung 9 betätigen Außerdem kann die Erfassungseinrichtung 9 auch durch das Betätigungselement 11A betätigt werden, dass aus einer in etwa im Wesentlichen senkrecht zur Schaltrichtung 19 verlaufenden Betätigungsrichtung 31 im zweiten Betätigungsbereich 27 an die Erfassungseinrichtung angreift. Hierdurch kann die erste Erfassungseinrichtung 9 ebenfalls entlang der Schaltrichtung 18 vor und zurück bewegt werden. Vorteilhafter Weise können so an der vorliegenden Küchenmaschine 1 auch Bearbeitungsgeräte an der ersten Kupplungsstelle 3 betrieben werden, welche keine unmittelbar in Schaltrichtung auf die erste Erfassungseinrichtung 9 wirkende Betätigungselemente 11 aufweisen sondern ein in etwa senkrecht dazu auf die erste Erfassungseinrichtung 9 wirkende Betätigungselement 11A.

Die Küchenmaschine 1 kann vorteilhafterweise mit Bearbeitungsgeräten 4 betrieben werden, die auf unterschiedliche Weise an die Erfassungseinrichtung 9 angreifen.
Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. System umfassend eine Küchenmaschine (1) und mindestens ein erstes und ein zweites Bearbeitungsgerät (4) oder Abdeckteil, bei dem die Küchenmaschine (1) eine Kupplungsstelle (3) zum Aufsetzen der Bearbeitungsgeräte (4) umfasst, an der eine Erfassungseinrichtung (9) zum Ermitteln des aufgesetzten Bearbeitungsgerätes (4) oder Abdeckteils angeordnet ist, die Erfassungseinrichtung (9) wenigstens zwei verschiedenen Betätigungsbereiche (25, 27) aufweist, und die Bearbeitungsgeräte (4) oder Abdeckteile je ein Betätigungselement (11, 11A) aufweisen, das die Erfassungseinrichtung (9) durch Aufsetzen des Bearbeitungsgeräts oder Abdeckteils auf die Kupplungsstelle (3) betätigen kann, wobei das erste Bearbeitungsgerät (4) eine Betätigungseinrichtung (11) aufweist, die die Erfassungseinrichtung durch Krafteinwirkung in dem ersten Betätigungsbereich (25) betätigt und das zweite Bearbeitungsgerät eine Betätigungseinrichtung (11A) aufweist, die die Erfassungseinrichtung (9) durch Krafteinwirkung in dem zweiten Betätigungsbereich (27) betätigt,
**dadurch gekennzeichnet, dass** die Erfassungseinrichtung (9) wenigstens zwei verschiedene und verschieden orientierte Betätigungsbereiche (25, 27) aufweist, wobei die Betätigungsbereiche (25, 27) glatt ineinander übergehend an der Erfassungseinrichtung (9) angeordnet sind,
wobei die Betätigungsbereiche (25, 27) eine gekrümmte Betätigungsfläche (26) an der Erfassungseinrichtung (9) bilden.

2. System nach Anspruch 1, **dadurch gekennzeichnet, dass** die Erfassungseinrichtung im ersten Betätigungsbereich (25) durch Krafteinwirkung aus einer ersten Betätigungsrichtung (18) betätigbar ist und im zweiten Betätigungsbereich (27) durch Krafteinwirkung aus einer hiervon abweichenden zweiten Betätigungsrichtung (29) betätigbar ist.

3. System nach einem der vorherigen Ansprüche, **dadurch gekennzeichnet, dass**, die Erfassungseinrichtung (9) im ersten Betätigungsbereich (25) durch Krafteinwirkung aus einer ersten im Wesentlichen in die Schaltrichtung (19) der Erfassungseinrichtung (9) verlaufenden Betätigungsrichtung (18) betätigt werden kann.

4. System nach einem der vorherigen Ansprüche, **dadurch gekennzeichnet, dass** die Erfassungseinrichtung (9) im zweiten Betätigungsbereich (27) durch Krafteinwirkung aus einer von der Schaltrichtung (19) abweichenden Betätigungsrichtung (29) betätigt werden kann.

5. System nach Anspruch 1, **dadurch gekennzeichnet, dass** Flächennormalen der Betätigungsbereiche (25, 29) einen Winkel (28) zwischen 10° und 90° einschließen.

6. System nach einem der vorherigen Ansprüche, **dadurch gekennzeichnet, dass** mindestens einer der Betätigungsbereiche (25, 27) im Wesentlichen als ebene Fläche ausgebildet ist.

7. System nach einem der vorherigen Ansprüche, **dadurch gekennzeichnet, dass** die Betätigungsbereiche (25, 27) voneinander beabstandet an der Erfassungseinrichtung (9) angeordnet sind.

8. System nach einem der vorherigen Ansprüche, **dadurch gekennzeichnet, dass** die Betätigungsbereiche (25, 27) aneinander angrenzend an der Erfassungseinrichtung (9) angeordnet sind.

9. System nach einem der vorherigen Ansprüche, **dadurch gekennzeichnet, dass** die Betätigungsbereiche (25, 27) an einem ein Ende der Erfassungseinrichtung (9) angeordnet sind, das vorzugsweise aus dem Gehäuse (2) der Küchenmaschine (1) hinausragt.

10. System nach einem der vorherigen Ansprüche, **dadurch gekennzeichnet, dass** die Erfassungseinrichtung (9) in einer Führung (23) translatorisch derart geführt gelagert ist, dass auf die Erfassungseinrichtung (9) im Wesentlichen senkrecht zur Schaltrichtung (19) wirkende Betätigungskräfte (32) eine Bewegung der Erfassungseinrichtung (9) entlang einer Schaltrichtung (18) bewirken können.

## Claims

1. System comprising a food processor (1) and at least a first and a second processing device (4) or cover part, wherein for the purpose of attaching the processing devices (4) the food processor (1) comprises a coupling point (3) on which a detection device (9) for detecting the attached processing device (4) or cover part is disposed, the detection device (9) has at least two different actuating regions (25, 27), and the processing devices (4) or cover parts each have an actuating element (11, 11 A) which can actuate the detection device (9) by attachment of the processing device or cover part to the coupling point (3), wherein the first processing device (4) has an actuating device (11) which actuates the detection device through application of a force in the first actuating region (25) and the second processing device has an actuating device (11A) which actuates the detection device (9) through application of a force in the second actuating region (27),
**characterised in that** the detection device (9) has at least two different and differently oriented actuating regions (25, 27), wherein the actuating regions (25, 27) are disposed such that they transition smoothly into each other on the detection device (9),
wherein the actuating regions (25, 27) form a curved actuating surface (26) on the detection device (9).

2. System according to claim 1, **characterised in that** the detection device can be actuated in the first actuating region (25) by application of a force from a first actuating direction (18) and can be actuated in the second actuating region (27) by application of a force from a second actuating direction (29) that is different from the first.

3. System according to one of the preceding claims, **characterised in that** the detection device (9) can be actuated in the first actuating region (25) by application of a force from a first actuating direction (18) running essentially in the switching direction (19) of the detection device (9).

4. System according to one of the preceding claims, **characterised in that** the detection device (9) can be actuated in the second actuating region (27) by application of a force from an actuating direction (29) that is different from the switching direction (19).

5. System according to claim 1, **characterised in that** surface normals of the actuating regions (25, 29) form an angle (28) between 10° and 90°.

6. System according to one of the preceding claims, **characterised in that** at least one of the actuating regions (25, 27) is embodied essentially as an even surface.

7. System according to one of the preceding claims, **characterised in that** the actuating regions (25, 27) are disposed at a distance from each other on the detection device (9).

8. System according to one of the preceding claims, **characterised in that** the actuating regions (25, 27) are disposed adjacent to each other on the detection device (9).

9. System according to one of the preceding claims, **characterised in that** the actuating regions (25, 27) are disposed at an end of the detection device (9) which preferably projects from the housing (2) of the food processor (1).

10. System according to one of the preceding claims, **characterised in that** the detection device (9) is supported in a guide (23) and translationally guided in such a way that actuating forces (32) acting on the detection device (9) essentially perpendicularly to the switching direction (19) can effect a movement of the detection device (9) along a switching direction (18).

## Revendications

1. Système comprenant un robot de cuisine (1) et au moins un premier et un deuxième appareil de traitement (4) ou élément de recouvrement, dans lequel le robot de cuisine (1) comprend un point de couplage (3) pour la mise en place des appareils de traitement (4), au niveau duquel est disposé un moyen de détection (9) servant à déterminer l'appareil de traitement (4) ou l'élément de recouvrement mis en place, dans lequel le moyen de détection (9) présente au moins deux parties d'actionnement (25, 27) différentes, et dans lequel les appareils de traitement (4) ou éléments de recouvrement présentent chacun un élément d'actionnement (11, 11A), capable d'actionner le moyen de détection (9) en posant l'appareil de traitement ou l'élément de recouvrement sur le point de couplage (3), le premier appareil de traitement (4) présentant un moyen d'actionnement (11) qui actionne le moyen de détection par l'action d'une force dans la première partie d'actionnement (25), et le deuxième moyen d'actionnement présentant un moyen d'actionnement (11A) qui actionne le moyen de détection (9) par l'action d'une force dans la deuxième partie d'actionnement (27),
**caractérisé en ce que** le moyen de détection (9) présente au moins deux parties d'actionnement (25, 27) différentes et orientées différemment, les parties d'actionnement (25, 27) étant disposées sur le moyen de détection (9) en se fondant l'une dans l'autre,
les parties d'actionnement (25, 27) formant une surface d'actionnement courbe (26) sur le moyen de détection (9).

2. Système selon la revendication 1, **caractérisé en ce que** le moyen de détection peut être actionné dans la première partie d'actionnement (25) par l'action d'une force depuis une première direction d'actionnement (18) et peut être actionné dans la deuxième partie d'actionnement (27) par l'action d'une force depuis une deuxième direction d'actionnement (29) différente de la première.

3. Système selon l'une des revendications précédentes, **caractérisé en ce que** le moyen de détection (9) peut être actionné dans la première partie d'actionnement (25) par l'action d'une force depuis une première direction d'actionnement (18) s'étendant sensiblement dans la direction de commutation (19) du moyen de détection (9).

4. Système selon l'une des revendications précédentes, **caractérisé en ce que** le moyen de détection (9) peut être actionné dans la deuxième partie d'actionnement (27) par l'action d'une force depuis une direction d'actionnement (29) différente de la direction de commutation (19).

5. Système selon la revendication 1, **caractérisé en ce que** des normales des surfaces des parties d'actionnement (25, 29) forment un angle (28) compris entre 10° et 90°.

6. Système selon l'une des revendications précédentes, **caractérisé en ce qu'**au moins une des parties d'actionnement (25, 27) est réalisée sous la forme d'une surface sensiblement plane.

7. Système selon l'une des revendications précédentes, **caractérisé en ce que** les parties d'actionnement (25, 27) sont disposées à distance l'une de l'autre sur le moyen de détection (9).

8. Système selon l'une des revendications précédentes, **caractérisé en ce que** les parties d'actionnement (25, 27) sont disposées de manière adjacente l'une à l'autre sur le moyen de détection (9).

9. Système selon l'une des revendications précédentes, **caractérisé en ce que** les parties d'actionnement (25, 27) sont disposées à une extrémité du moyen de détection (9) faisant de préférence saillie du boîtier (2) du robot de cuisine (1).

10. Système selon l'une des revendications précédentes, **caractérisé en ce que** le moyen de détection (9) est logé dans un guide (23) de manière mobile en translation, de telle sorte que des forces d'actionnement (32) agissant sensiblement perpendiculairement à la direction de commutation (19) peuvent provoquer un déplacement du moyen de détection (9) suivant une direction de commutation (18).
